Europäisches Patentamt

European Patent Office

Office européen des brevets

(19)

(11) EP 1 286 348 A2

(12) EUROPEAN PATENT APPLICATION

(43) Date of publication:
26.02.2003 Bulletin 2003/09

(51) Int Cl.⁷: **G11B 20/00**, H04N 5/913

(21) Application number: 02017246.6

(22) Date of filing: 31.07.2002

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(30) Priority: **03.08.2001 JP 2001236698**

(71) Applicant: **President of Tohoku University**
**Sendai 980-8577 (JP)**

(72) Inventors:
• **Suzuki, Yoiti**
  **Sendai-shi, Miyagi-ken (JP)**
• **Nishimura, Ryouichi**
  **Sendai-shi, Miyagi-ken (JP)**

(74) Representative: **Hertz, Oliver, Dr.**
**v. Bezold & Partner,**
**Patentanwälte**
**Akademiestrasse 7**
**80799 München (DE)**

(54) **Digital data embedding/detection apparatus based on periodic phase shift**

(57)     When a music signal undergoes sinusoidal phase modulation using a second-order all-pass filter, if the period of modulation is equal to or lower than several hundreds Hz, that modulation is not perceived by a human being. Watermark information is embedded using this phase modulation as a carrier, thus implementing digital watermarking. On the detector, since a model of the all-pass filter used in phase modulation is known, the filter is estimated by ARMA model parameter estimation, and the dynamic characteristics of phase modulation are estimated from its temporal change.

SOUND SOURCE

FILTERING BY
ALL-PASS FILTER

DIGITAL WATERMARK
INFORMATION

ADDITIVE
SELF-NOISE

ARMA MODEL
EVALUATION

SOUND SOURCE

PHASE CHARACTERISTICS
OF EVALUATED FILTER

AUTOCORRELATION
FUNCTION

SEARCH FOR FIRST
PEAK

DIGITAL WATERMARK

FIG. 9

EP 1 286 348 A2

**Description**

The present invention relates to digital watermarking using phase modulation and, more particularly, to digital watermarking for a music signal using phase modulation by a time-varying all-pass filter as a carrier.

Since high-speed networks have been realized, multimedia contents, which are saved/transported using physical media such as tapes, disks, and the like, can be digitally and instantaneously transferred to a remote place. This system can yield profits for the distribution industry since the saving/distribution cost of physical media can be reduced. On the other hand, such system is convenient for consumers since regional differences can be eliminated, the number of choices of means of purchasing can be increased, and so forth. Furthermore, producers of multimedia contents can enjoy opportunity to directly ask the pubic for evaluation of their works in place of referring to some critics of music and movie companies. Network distribution of multimedia contents has such many merits, but suffers various problems since due to digital contents.

As a largest factor that disturbs prevalence of network distribution of digital music media, a problem associated with copyrights is known. Unlike analog contents, perfect copies of digital music media can be easily and unlimitedly generated. The sense of awe for copyright holders varies depending on countries and cultures, and illegal copies are formed on a large scale in some regions. This is a unique problem we experience due to a global network.

As a technique that can solve this problem, digital watermarking has received a lot of attention. Digital watermarking embeds additional information in contents themselves so as to be unperceivable by the user. Hence, digital watermarking is different from encryption since the user can use the contents, and is also different from a method of describing additional information in a header, since watermark information is hard to remove.

As digital watermarking techniques for digital audio signals, for example, a spread spectrum method described in L. Boney, A. H. Twefik, and K. N. Hamdy, "Digital watermarks for audio signals," IEEE International Conference on Multimedia Computing and Systems, pp. 473-480, June 1996", a method that has improved the spread spectrum method described in Sang-Kwang Lee, and Yo-Sung Ho, "Digital audio watermarking in the cepstrum domain," IEEE Transaction on Consumer Electronics, pp. 744-750, August 2000, echo hiding described in W. C. Wong, R. Steele, and C. S. Xydeas, "Transmitting data on the phase of speech signals," Bell System Technical Journal, Vol. 61, No. 10, pp. 2947-2970, 1982 and Hyen O Oh, Jong Won Seok, Jin Woo Hong, and Dae Hee Youn, "New echo embedding technique for robust and imperceptible audio watermarking," IEEE International Conference on Audio, Speech, and Signal Processing, May 2001, a scheme using quantization described in Munetoshi Iwakiri and Kineo Matsui, "One digital watermarking scheme for music software," 1998 Symposium on Encryption and Information Security, SCIS'98-8.2.C, 1998 and Mohamed F. Mansour and Ahmed H. Tewfik, "Audio watermarking by time-scale modification," IEEE International Conference on Audio, Speech, and Signal Processing, May 2001, and the like have been proposed so far. Even in schemes using the spread spectrum method, various examinations for improving robustness against attacks by, e.g., using elaborate encoding schemes, have been made (described in, e.g., M. Ikeda, K. Takeda, and F. Itakura, "Robust audio data hiding by use of trellis coding," WESTPRAC VII, Vol. I, pp. 413-416, October 2000 and Aparna Gurijala and Jr. J. R. Deller, "Robust algorithm for watermark recovery," IEEE International Conference on Audio, Speech, and Signal Processing, May 2001). However, these schemes are not always adequate since they all have merits and demerits, and the preconditions and required conditions vary depending on applications.

In the spread spectrum method, a watermark signal is embedded while being spread over a broad frequency band on the frequency axis to minimize the influences of the watermark signal on respective frequency bands, thus preventing the watermark signal from being perceived by a human being. Hence, this method exploits the fact that the auditory system of a human being makes band analysis on the frequency axis upon analyzing an audio signal. However, since the energy of a voice or music signal is not always distributed to all frequency bands all the time, superposition of the watermark signal can be readily detected in a frequency band in which the energy becomes small.

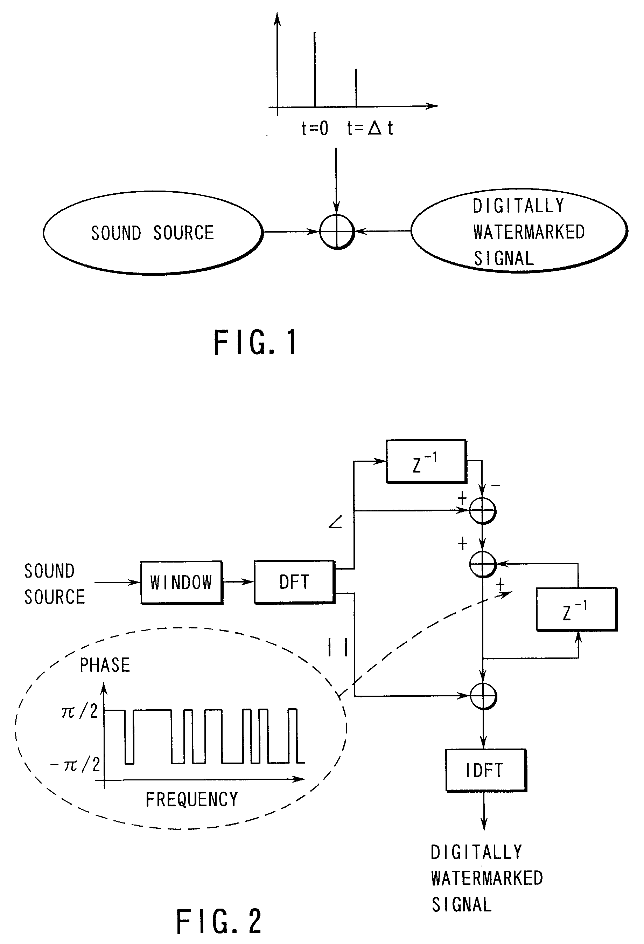

Echo hiding is a scheme for embedding watermark information in an audio signal by convoluting an impulse response having values at times 0 and $\Delta t$ in the audio signal, as shown in FIG. 1. Since the receiver can estimate $\Delta t$ by computing the autocorrelation of the received signal, digital information can be transmitted by quantizing this $\Delta t$. If $\Delta t$ is sufficiently small, since the watermark is perceived while being blended with preceding tones, a human ear cannot perceive the presence of the watermark. Even when the watermark is perceived as an echo due to relatively large $\Delta t$, a steady one, or the like, he or she perceives it as an enhanced echo, and there is no fear of deterioration of sound quality such as mixing of noise.

A phase change method exploits the auditory characteristics of a human being with respect to the phases of tones. The auditory sense of a human being is not always sensitive to phases. It is experimentally demonstrated that a change in phase at a relatively low frequency is perceived as a change in tone color, but human beings are not sensitive to the phase of high-frequency components. Also, human beings can perceive a relative phase difference, but cannot perceive an absolute phase.

Hence, a scheme that utilizes such nature in digital watermarking has been proposed. As shown in FIG. 2, watermark information is generated by setting binary data in correspondence with phase modulation amounts $\pi/2$ and

-π/2, and forming a sequence of these data on the frequency axis. In FIG. 2, "DFT" and "IDFT" respectively indicate "discrete Fourier transformation" and "inverse discrete Fourier transformation". The phase of the first frame of an audio signal is converted into that based on watermark data, and the phase of each subsequent frame is determined to have the same phase relationship with the previous frame as in an original audio signal. In this way, it is expected that human beings cannot sensibly perceive that difference. However, the relative phase relationship in the frequency axis direction is largely different from that of the original audio signal, and that difference is perceived as a distortion.

It is an object of the present invention to provide a digital data embedding/detection apparatus based on a periodic phase shift, which temporally and slowly changes a phase modulation amount, and embeds watermark information in its dynamic characteristics, thus removing phase distortion.

A digital data embedding apparatus based on a periodic phase shift according to an embodiment of the present invention, comprises:

   means for embedding digital watermark information in a continuous change in phase component of a music signal;
   an all-pass filter for giving a continuous change to the phase component of the music signal; and
   means for continuously changing the all-pass filter to temporally continuously change a phase modulation amount in place of using an absolute phase modulation amount, and embedding watermark data in a mode of the temporal change of the characteristics.

A digital data detection apparatus based on a periodic phase shift according to an embodiment of the present invention, comprises:

   means for segmenting a received signal embedded with a watermark signal into frames each having a given length;
   means for making ARMA model parameter estimation using each segmented frame and a corresponding original audio signal;
   means for calculating phase characteristics of an all-pass filter on the basis of model parameters obtained by the means for making ARMA model parameter estimation;
   means for generating time-series data by arranging phases obtained for respective frames in turn; and
   means for calculating a period of the time-series data.

A digital data embedding and detection apparatus based on a periodic phase shift according to an embodiment of the present invention, comprises:

   means for embedding digital watermark information in a continuous change in phase component of a music signal;
   an all-pass filter for giving a continuous change to the phase component of the music signal;
   means for continuously changing characteristics of the all-pass filter to temporally continuously change a phase modulation amount in place of using an absolute phase modulation amount, and embedding watermark data in a mode of the temporal change of the characteristics;
   means for segmenting the signal embedded with the watermark data into frames each having a given length;
   means for making ARMA model parameter estimation using each frame and a corresponding original audio signal;
   means for calculating phase characteristics of the all-pass filter on the basis of model parameters obtained by the means for making ARMA model parameter estimation; and
   means for arranging phases obtained for respective frames in turn in consideration of a given specific frequency to obtain time-series data, calculating an autocorrelation function of the time-series data, and calculating a period of the time-series data on the basis of peaks of the autocorrelation function.

A digital data embedding method based on a periodic phase shift according to an embodiment of the present invention, comprises the steps of:

   embedding digital watermark information in a continuous change in phase component of a music signal;
   giving a continuous change to the phase component of the music signal by using an all-pass filter; and
   continuously changing the all-pass filter to temporally continuously change a phase modulation amount in place of using an absolute phase modulation amount, and embedding watermark data in a mode of the temporal change of the characteristics.

A digital data detection method based on a periodic phase shift according to an embodiment of the present invention, comprises the steps of:

   segmenting a received signal embedded with a watermark signal into frames each having a given length;

making ARMA model parameter estimation using each segmented frame and a corresponding original audio signal;

calculating phase characteristics of an all-pass filter on the basis of model parameters obtained by the step of making ARMA model parameter estimation;

generating time-series data by arranging phases obtained for respective frames in turn; and

calculating a period of the time-series data.

A digital data embedding and detection method based on a periodic phase shift according to an embodiment of the present invention, comprises the steps of:

embedding digital watermark information in a continuous change in phase component of a music signal;

giving a continuous change to the phase component of the music signal by an all-pass filter;

continuously changing characteristics of the all-pass filter to temporally continuously change a phase modulation amount in place of using an absolute phase modulation amount, and embedding watermark data in a mode of the temporal change of the characteristics;

segmenting the signal embedded with the watermark data into frames each having a given length;

making ARMA model parameter estimation using each frame and a corresponding original audio signal;

calculating phase characteristics of the all-pass filter on the basis of model parameters obtained by the step of making ARMA model parameter estimation;

arranging phases obtained for respective frames in turn in consideration of a given specific frequency to obtain time-series data;

calculating an autocorrelation function of the time-series data; and

calculating a period of the time-series data on the basis of peaks of the autocorrelation function.

According to the embodiments of the present invention, paying attention to poor auditory sense with respect to phase, the phase modulation amount is temporally and slowly changed, and watermark information is embedded in its dynamic characteristics in place of fixed phase modulation. Phase modulation can use, e.g., an all-pass filter. By applying filter coefficients of the all-pass filter to an original audio signal while periodically and smoothly changing them, a watermarked signal is generated.

According to the embodiments of the present invention, since a music signal undergoes phase modulation while temporally smoothly changing the characteristics of an all-pass filter, and watermark information is embedded in the mode of a temporal change of the characteristics in place of the characteristics themselves of the all-pass filter, for example, a music agent embeds a digital watermark according to the embodiments of the present invention in music media upon distributing music media, illegal copies of which are to be limited. After that, when a medium which is suspected to be an illegal copy is found somewhere, the music agent as a selling agency who possesses an original music signal without any watermark can detect using the watermark detection method according to the present invention whether the watermark information is embedded in that medium, and can detect any illegal copy. Hence, the present invention is effective to dig up illegal copies of music media and to identify the source of media. If no original music signal is available, it is very difficult to extract watermark data. Therefore, it is hard to tamper with watermark data.

This summary of the invention does not necessarily describe all necessary features so that the invention may also be a sub-combination of these described features.

The invention can be more fully understood from the following detailed description when taken in conjunction with the accompanying drawings, in which:

FIG. 1 is a view for explaining echo hiding;

FIG. 2 is a view for explaining generation of digital watermark by setting binary data in correspondence with phase modulation amounts $\pi/2$ and $-\pi/2$ based on a phase change method, and forming a sequence of these data on the frequency axis;

FIG. 3 is a graph showing the phase characteristics of an all-pass filter for some $\omega_0$ values;

FIG. 4 is a graph showing the phase modulation amount at a given frequency when $\omega_0$ is temporally and periodically changed;

FIG. 5 shows the time pattern of stimulus presentation;

FIGS. 6A, 6B, 6C, and 6D show the experimental results obtained by sinusoidally and periodically modulating the phase of a music signal using a second-order all-pass filter, and measuring the differential threshold between the modulated signal and an original music signal using an A-X-B method in which the modulated signal is always X, in which FIG. 6A shows a case of an instrumental piece, FIG. 6B shows a case of a vocal piece, FIG. 6C shows a case of a pink noise, and FIG. 6D shows a case of a pulse train;

FIGS. 7A, 7B, 7C, and 7D show a procedure for estimating the period of phase modulation;

FIGS. 8A and 8B show a temporal change in modulated phase amount at a given frequency and its autocorrelation function;

FIG. 9 is a diagram showing a system used in an explanation of watermark detection when jamming noise is present;

FIGS. 10A, 10B, and 10C show graphs of an autocorrelation function obtained by the final stage of detection when the S/N ratio between added noise and a music signal is 10 dB, 0 dB, and -10 dB;

FIG. 11 is a block diagram showing the system arrangement that implements a digital data embedding/detection apparatus based on a periodic phase shift according to an embodiment of the present invention;

FIG. 12 is a flow chart showing a digital data embedding process according to the embodiment of the present invention;

FIG. 13 is a flow chart showing an example of a digital data detection process according to the embodiment of the present invention;

FIG. 14 is a flow chart showing a digital data embedding/detection process according to the embodiment of the present invention;

FIG. 15 is a flow chart showing a digital data embedding process based on a periodic phase shift according to the embodiment of the present invention; and

FIG. 16 is a flow chart showing a digital data detection process based on a periodic phase shift according to the embodiment of the present invention.

An embodiment of a digital data embedding/detection apparatus according to the present invention will now be described with reference to the accompanying drawings.

An all-pass filter used in digital watermarking by periodic phase modulation will be explained first.

The transfer function of a second-order all-pass filter in the s-domain is given by:

$$H(s) = \frac{s^2 - \dfrac{\omega_0}{Q}s + \omega_0^2}{s^2 + \dfrac{\omega_0}{Q}s + \omega_0^2} \tag{1}$$

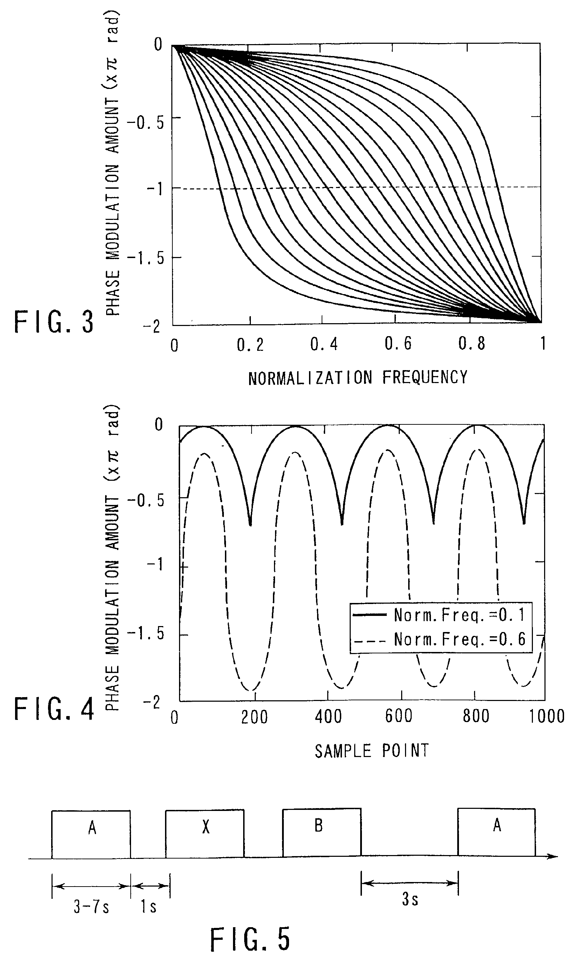

The amplitude characteristics of the all-pass filter are always 1 independently of frequencies. On the other hand, the phase characteristics are determined by parameters $Q$ and $\omega_0$. FIG. 3 shows the phase characteristics of the all-pass filters for some $\omega_0$ values. $\omega_0$ corresponds to a frequency at which a phase deviation becomes $-\pi$. The parameter $Q$ is used to obtain the kurtosis of a phase change with respect to a change in frequency.

In practice, since the all-pass filter is used as a digital filter, equation (1) undergoes bilinear transformation and is used in the form of equation (2):

$$H(z) = \frac{a + bz^{-1} + z^{-2}}{1 + bz^{-1} + az^{-2}} \tag{2}$$

for

$$a \equiv \frac{4F_s^2 - 2F_s\omega_0/Q + \omega_0^2}{4F_s^2 + 2F_s\omega_0/Q + \omega_0^2} \tag{3}$$

$$b \equiv \frac{2(\omega_0 + 2F_s)(\omega_0 - 2F_s)}{4F_s^2 + 2F_s\omega_0/Q + \omega_0^2} \tag{4}$$

where $F_s$ is the sampling frequency.

FIG. 4 shows the phase modulation amount at a given frequency when $\omega_0$ has been temporally and periodically changed. As can be seen from FIG. 4, the phase at a certainly high frequency varies largely, but a variation of the phase at a low frequency is sufficiently small. As described above, since human auditory sense is sensitive to a change in phase at a low frequency, the variation characteristics of the all-pass filter work very well for use in digital watermarking.

The present inventors measured a difference between an original music signal and a signal obtained by periodically modulating the phase of the music signal. That is, the phase of a music signal was sinusoidally and periodically modulated using a second-order all-pass filter, and the differential threshold between the modulated signal and the original music signal was measured using an A-X-B method in which the modulated signal is always X. The time pattern of stimulus presentation is as shown in FIG. 5. The variable in this experiment is the period of phase modulation.

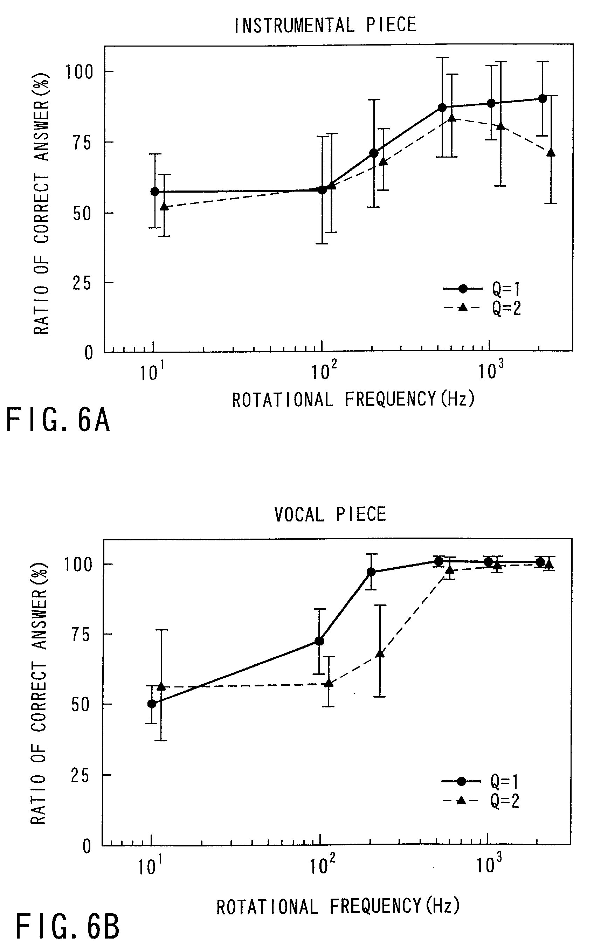

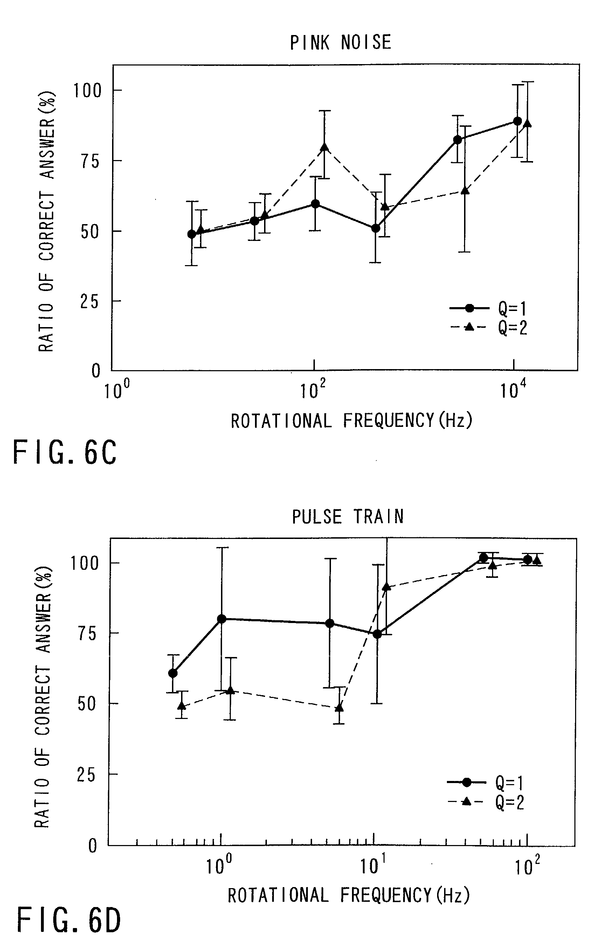

Following table and FIGS. 6A, 6B, 6C, and 6D respectively show experimental conditions and experimental results.

| Experimental conditions in experiments of detection threshold measurement for periodic phase modulation | |
|---|---|
| Subject | 5 adults (4 males, 1 female) |
| Sound source | Pulse train 75 dB(SPL) |
| | Pink noise 75 dB(SPL) |
| | Music signal (vocal, instrumental) 77 dB (SPL) |
| Q | 1, 2 |
| $\omega_0$ | 8-20 kHz |
| Presentation method | Diotic hearing |
| Presentation time | Four times each of stimuli with different rotational frequencies |

From FIGS. 6A, 6B, 6C, and 6D, we find:

1. Phase modulation for a music signal is detected at around several hundreds Hz.
2. Phase modulation for a pulse train is detected most easily in the current experimental conditions, and a sound quality difference by phase modulation is detected at a period of several Hz.
3. Detection is very hard for a signal such as noise that originally has a random phase.
4. The frequency of phase rotation as a detection threshold rises when the parameter Q (kurtosis) is 2 rather than 1.

From these findings, the present inventors concluded that if the phase rotation frequency was set at several hundreds Hz or lower, a music signal that has undergone periodic phase modulation cannot be detected, and this technique is used in digital watermarking.

As an application to digital watermarking, there are several ways of digital watermarking that uses periodic phase modulation depending on the encoding technique used. As a basic examination, a system in which the frequency of phase rotation is used as information, a transmitter phase-modulates a music signal at a given frequency, and a receiver extracts a watermark signal by estimating the frequency will be examined, and a detection method in such case will be explained.

The all-pass filter given by equation (2) can be expressed by a second-order ARMA (autoregressive moving-average) model. Hence, if a digitally watermarked signal (phase-modulated signal) and a signal (original signal) in which no digital watermark signal is embedded are available; filter coefficients of the all-pass filter used in phase modulation can be obtained by ARMA model parameter estimation. However, in this method, time-varying filter coefficients must be taken into consideration. Also, a temporal change in filter coefficient of the all-pass filter is to be obtained in place of the filter coefficients themselves.

Hence, the present inventors tried to estimate the period of phase modulation in the following procedure.

<Detection Procedure>

1. A received signal is segmented into frames each having a given length.
2. ARMA model parameter estimation is done using each frame and a corresponding original signal.
3. Based on the obtained model parameters, the phase characteristics of the all-pass filter are calculated.
4. Time-series data is generated by arranging phases obtained for respective frames in turn.
5. The period of this time-series data is calculated.

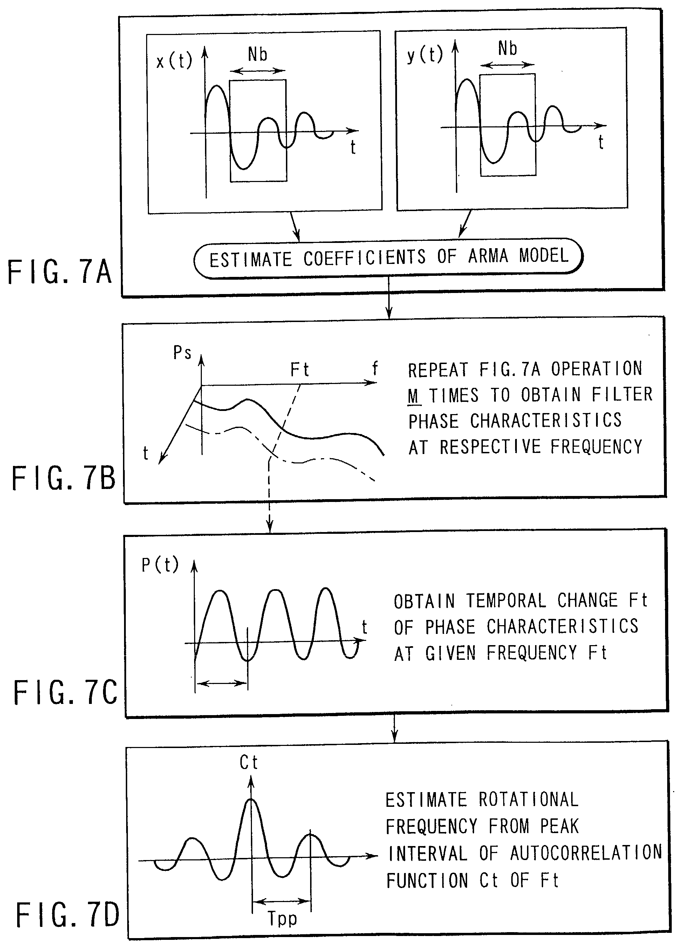

FIGS. 7A, 7B, 7C, and 7D show this procedure. In FIG. 7A, x(t) is an original audio signal, and y(t) is a watermarked signal.

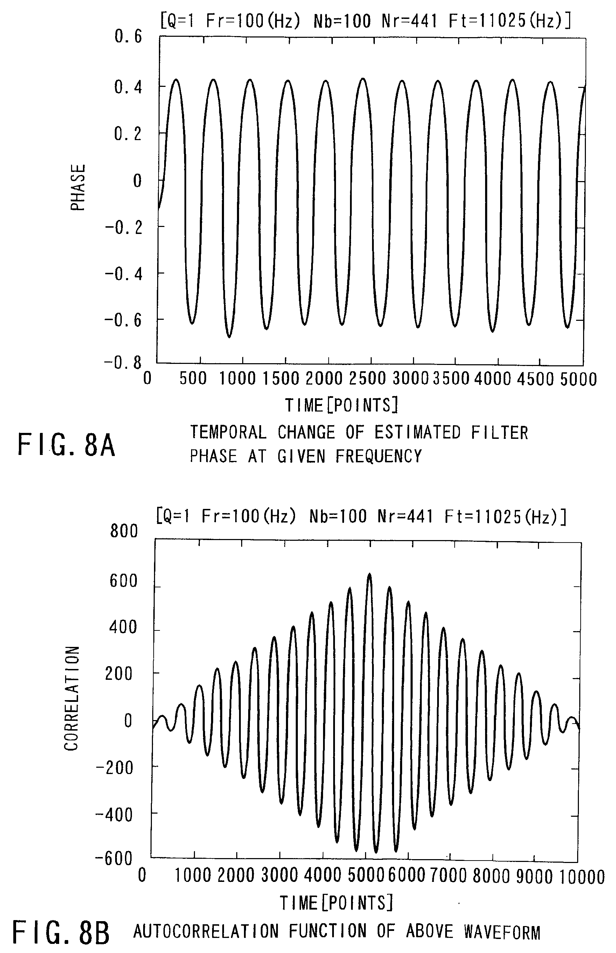

FIG. 8A shows a temporal change in modulated phase amount at a given frequency ft (11,025 Hz), and FIG.

8B shows its autocorrelation function. A period Fr of phase modulation is 100 Hz, and a frame length Nb is 100 points. Since a sampling frequency Fs is 44.1 kHz, detection of a watermark is successful if the peak interval of the autocorrelation function matches Fr/Fs = 441 points. As can be seen from these graphs, the period of phase modulation can be accurately obtained by the detection method of the present invention if no noise is present.

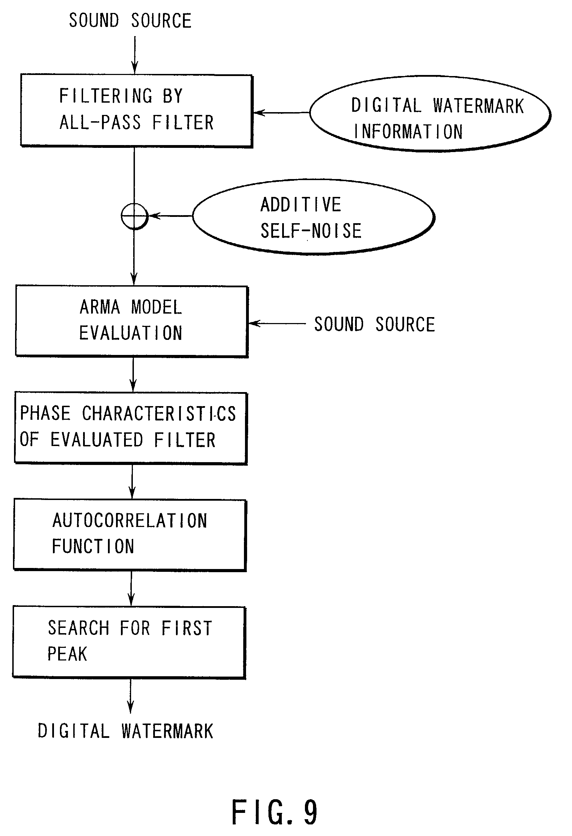

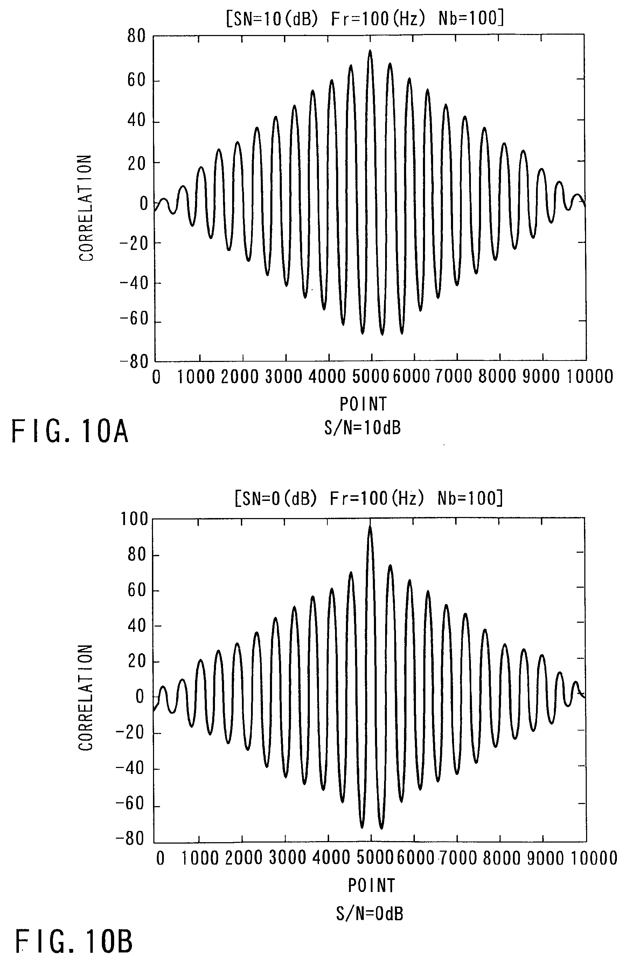

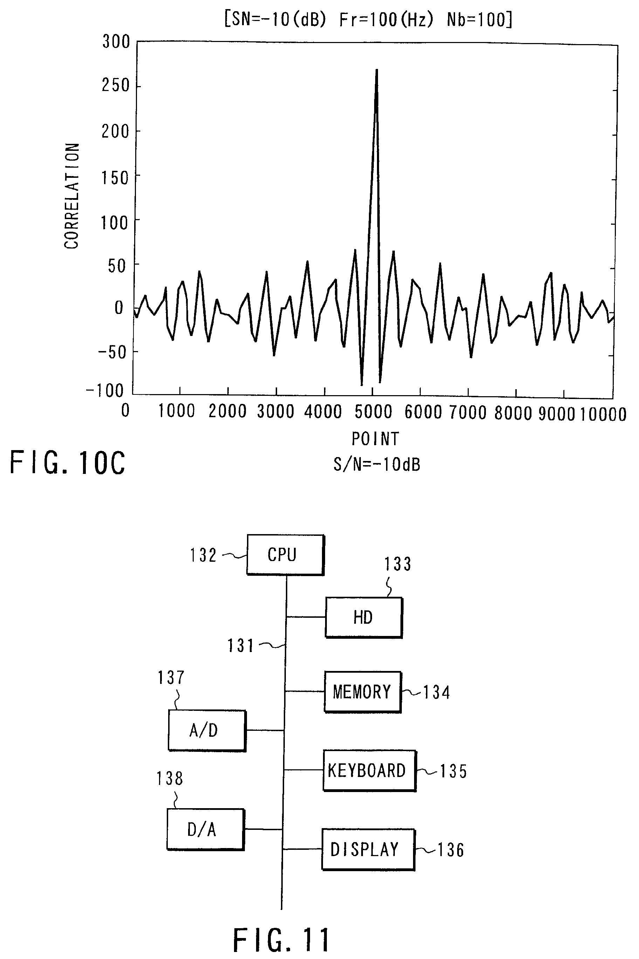

Watermark detection when jamming noise is present will be explained below. FIG. 9 shows a watermark detection system. The transmitter embeds a watermark signal by the method according to the embodiment of the present invention, and white noise is superposed on the watermark signal in a transmission path during transmission. The receiver attempts to detect the watermark signal from that signal in the above-described procedure. FIGS. 10A, 10B, and 10C show graphs of the autocorrelation function obtained by the final stage of detection when the S/N ratio between the added noise and music signal is 10 dB, 0 dB, and -10 dB. Terms and conditions are the same as those in FIGS. 8A and 8B, i.e., the frame length: 100 points, the target frequency 11025 Hz, and phase modulation frequency: 100 Hz. As can be seen from these graphs, if the S/N ratio is around 0 dB, the watermark signal may be detected without any problem. However, if the S/N ratio impairs to -10 dB, it becomes difficult to detect the watermark signal.

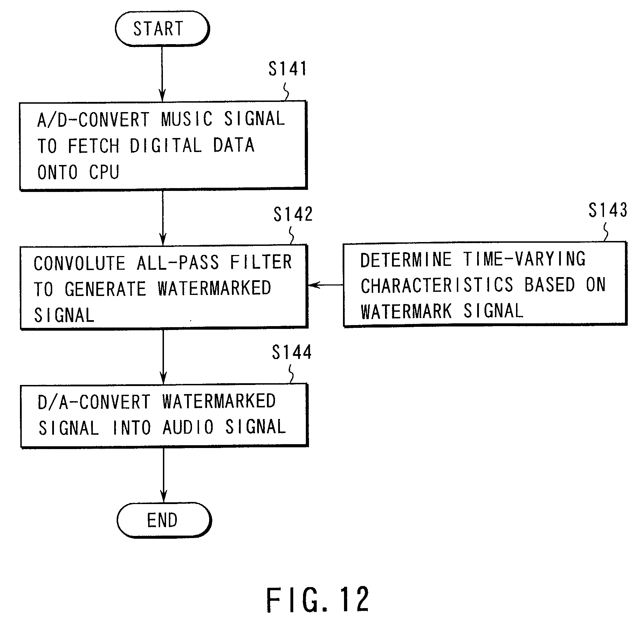

FIG. 11 is a block diagram showing the system arrangement that implements a digital data embedding/detection apparatus based on a periodic phase shift according to the present invention. As shown in FIG. 11, a CPU 132, hard disk 133, memory 134, keyboard 135, display 136, A/D converter 137, and D/A converter 138 are connected via a system bus 131. The CPU 132 controls the overall system. The hard disk 133 stores programs shown in the flow charts of FIGS. 12 to 16 (to be described below).

FIG. 12 is a flow chart showing a digital data embedding process according to the present invention. A music signal is analog/digital-converted into a digital signal to fetch data onto the CPU 132 shown in FIG. 11 in step S141. In step S142, the all-pass filter is convoluted to generate a watermarked signal. At this time, time-varying characteristics are determined based on watermark information in step S143. In step S144, the digital signal is digital/analog-converted into an audio signal.

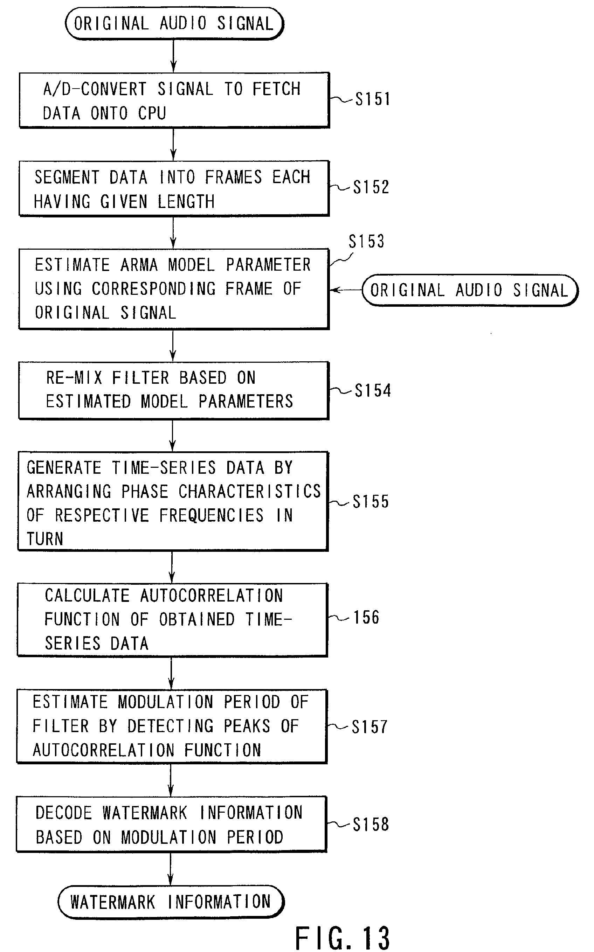

FIG. 13 is a flow chart showing an example of a digital data detection process according to the present invention. A received signal embedded with the watermark signal is analog/digital-converted into a digital data to fetch the data onto the CPU 132 in step S151. In step S152, the received signal data is segmented into frames each having a given length. In step S153, ARMA model parameter estimation is done using each frame of a corresponding original signal. In step S154, a filter is re-mixed based on estimated model parameters. In step S155, the phase characteristics of respective frequencies are arranged in turn to form time-series data. In step S156, an autocorrelation function of the obtained time-series data is obtained. In step S157, peaks of the autocorrelation function are detected to estimate the modulation period of the filter. In step S158, watermark information is decoded based on the modulation period to obtain watermark information.

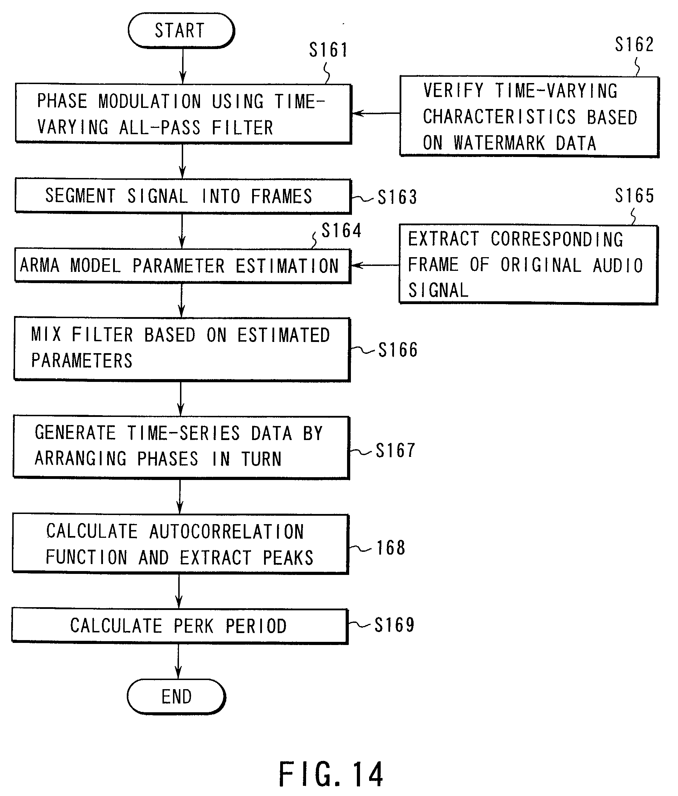

FIG. 14 is a flow chart showing a digital data embedding/detection process according to the embodiment of the present invention. In step S161, time-varying all-pass filter characteristics are continuously changed to temporally continuously change the phase modulation amount in place of using an absolute phase modulation amount, and watermark data is embedded in a mode of the temporal change of the characteristics. At this time, time-varying characteristics are verified based on watermark data in step S162. In step S163, a signal embedded with watermark data is segmented into frames each having a given length. In step S164, ARMA model parameter estimation is done using each frame and a corresponding original audio signal. At this time, the corresponding frame of the original audio signal is extracted in step S165. In step S166, the phase characteristics of the all-pass filter are calculated based on model parameters obtained by ARMA model parameter estimation. In step S167, the obtained phases for respective frames are arranged in turn to generate time-series data in consideration of a given specific frequency. In step S168, an autocorrelation function of the generated time-series data is obtained to extract peaks. In step S169, a period is calculated from the peak values.

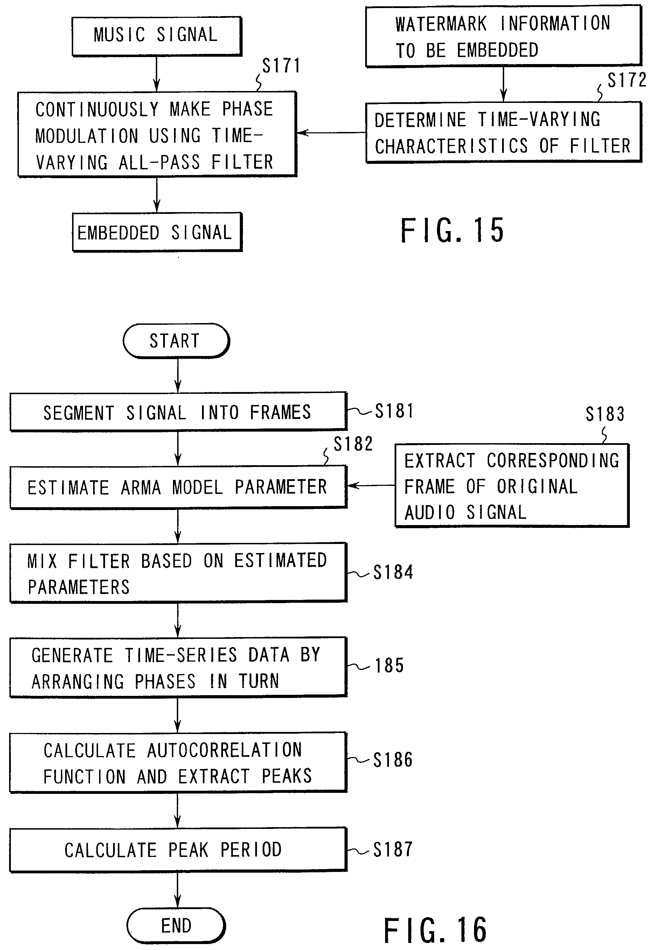

FIG. 15 is a flow chart showing a digital data embedding process based on a periodic phase shift. In step S171, digital watermark information is embedded in a continuous change in phase component of a music signal, and the watermarked signal undergoes continuous phase modulation using a time-varying all-pass filter. At this time, watermark data is embedded in a mode of the temporal change of the all-pass filter characteristics.

FIG. 16 is a flow chart showing a digital data detection process based on a periodic phase shift. In step S181, a received signal embedded with a watermark signal is segmented into frames each having a given length. In step S182, ARMA model parameter estimation is done using each segmented frame and a corresponding original audio signal. At this time, the corresponding frame of the original audio signal is extracted in step S183. In step S184, the characteristics of the all-pass filter are calculated based on the obtained model parameters. In step S185, phases obtained for the respective segmented frames are arranged in turn to generate time-series data in consideration of a phase at a given specific frequency. In step S186, an autocorrelation function is calculated to extract peaks. In step S187, a period is calculated from the obtained peaks.

While the description above refers to particular embodiments of the present invention, it will be understood that many modifications may be made without departing from the spirit thereof. The accompanying claims are intended to cover such modifications as would fall within the true scope and spirit of the present invention. The presently disclosed embodiments are therefore to be considered in all respects as illustrative and not restrictive, the scope of the invention being indicated by the appended claims, rather than the foregoing description, and all changes that come within the meaning and range of equivalency of the claims are therefore intended to be embraced therein. For example, the present invention can be practiced as a computer readable recording medium in which a program for allowing the computer to function as predetermined means, allowing the computer to realize a predetermined function, or allowing the computer to conduct predetermined means.

**Claims**

1. A digital data embedding apparatus based on a periodic phase shift, **characterized by** comprising:

   means for embedding digital watermark information in a continuous change in phase component of a music signal;
   an all-pass filter (S142) for giving a continuous change to the phase component of the music signal; and
   means (S143) for continuously changing said all-pass filter to temporally continuously change a phase modulation amount in place of using an absolute phase modulation amount, and embedding watermark data in a mode of the temporal change of the characteristics.

2. A digital data detection apparatus based on a periodic phase shift, **characterized by** comprising:

   means (S152) for segmenting a received signal embedded with a watermark signal into frames each having a given length;
   means (S153) for making ARMA model parameter estimation using each segmented frame and a corresponding original audio signal;
   means (S153) for calculating phase characteristics of an all-pass filter on the basis of model parameters obtained by said means for making ARMA model parameter estimation;
   means (S155) for generating time-series data by arranging phases obtained for respective frames in turn; and
   means (S158) for calculating a period of the time-series data.

3. A digital data embedding and detection apparatus based on a periodic phase shift, **characterized by** comprising:

   means for embedding digital watermark information in a continuous change in phase component of a music signal;
   an all-pass filter (S142) for giving a continuous change to the phase component of the music signal;
   means (S161) for continuously changing characteristics of said all-pass filter to temporally continuously change a phase modulation amount in place of using an absolute phase modulation amount, and embedding watermark data in a mode of the temporal change of the characteristics;
   means (S163) for segmenting the signal embedded with the watermark data into frames each having a given length;
   means (S164) for making ARMA model parameter estimation using each frame and a corresponding original audio signal;
   means (S166) for calculating phase characteristics of said all-pass filter on the basis of model parameters obtained by said means for making ARMA model parameter estimation; and
   means (S167) for arranging phases obtained for respective frames in turn in consideration of a given specific frequency to obtain time-series data, (S168) calculating an autocorrelation function of the time-series data, and (S169) calculating a period of the time-series data on the basis of peaks of the autocorrelation function.

4. A digital data embedding method based on a periodic phase shift, **characterized by** comprising the steps of:

   embedding digital watermark information in a continuous change in phase component of a music signal;
   giving (S171) a continuous change to the phase component of the music signal by using an all-pass filter; and
   continuously changing (S172) said all-pass filter to temporally continuously change a phase modulation amount in place of using an absolute phase modulation amount, and embedding watermark data in a mode of the temporal change of the characteristics.

5. A digital data detection method based on a periodic phase shift, **characterized by** comprising:

segmenting (S181) a received signal embedded with a watermark signal into frames each having a given length;

making (S182) ARMA model parameter estimation using each segmented frame and a corresponding original audio signal;

calculating (S184) phase characteristics of an all-pass filter on the basis of model parameters obtained by said step of making ARMA model parameter estimation;

generating (S185) time-series data by arranging phases obtained for respective frames in turn; and

calculating (S187) a period of the time-series data.

6. A digital data embedding and detection method based on a periodic phase shift, **characterized by** comprising:

embedding digital watermark information in a continuous change in phase component of a music signal;

giving (S161) a continuous change to the phase component of the music signal by an all-pass filter;

continuously changing (S162) characteristics of said all-pass filter to temporally continuously change a phase modulation amount in place of using an absolute phase modulation amount, and embedding watermark data in a mode of the temporal change of the characteristics;

segmenting (S163) the signal embedded with the watermark data into frames each having a given length;

making (S164) ARMA model parameter estimation using each frame and a corresponding original audio signal;

calculating (S166) phase characteristics of said all-pass filter on the basis of model parameters obtained by said step of making ARMA model parameter estimation;

arranging (S167) phases obtained for respective frames in turn in consideration of a given specific frequency to obtain time-series data;

calculating (S168) an autocorrelation function of the time-series data; and

calculating (S169) a period of the time-series data on the basis of peaks of the autocorrelation function.

FIG. 1

FIG. 2

EP 1 286 348 A2

FIG. 3

FIG. 4

FIG. 5

11

INSTRUMENTAL PIECE

FIG. 6A

VOCAL PIECE

FIG. 6B

PINK NOISE

FIG. 6C

PULSE TRAIN

FIG. 6D

FIG. 7A

x(t) Nb ... t

y(t) Nb ... t

ESTIMATE COEFFICIENTS OF ARMA MODEL

FIG. 7B

Ps Ft f t

REPEAT FIG. 7A OPERATION
M TIMES TO OBTAIN FILTER
PHASE CHARACTERISTICS
AT RESPECTIVE FREQUENCY

FIG. 7C

P(t) t

OBTAIN TEMPORAL CHANGE Ft
OF PHASE CHARACTERISTICS
AT GIVEN FREQUENCY Ft

FIG. 7D

Ct Tpp

ESTIMATE ROTATIONAL
FREQUENCY FROM PEAK
INTERVAL OF AUTOCORRELATION
FUNCTION Ct OF Ft

[Q=1 Fr=100(Hz)  Nb=100  Nr=441  Ft=11025(Hz)]

FIG. 8A    TEMPORAL CHANGE OF ESTIMATED FILTER
PHASE AT GIVEN FREQUENCY

[Q=1 Fr=100(Hz)  Nb=100  Nr=441  Ft=11025(Hz)]

FIG. 8B    AUTOCORRELATION FUNCTION OF ABOVE WAVEFORM

SOUND SOURCE

↓

```
┌─────────────────────┐          ╭──────────────────────╮
│   FILTERING BY      │ ◀─────── │  DIGITAL WATERMARK   │
│  ALL-PASS FILTER    │          │     INFORMATION      │
└─────────────────────┘          ╰──────────────────────╯
           │
           ▼
          ⊕ ◀─────── ╭──────────────────────╮
           │         │      ADDITIVE         │
           │         │     SELF-NOISE        │
           │         ╰──────────────────────╯
           ▼
┌─────────────────────┐
│    ARMA MODEL       │ ◀─────── SOUND SOURCE
│    EVALUATION       │
└─────────────────────┘
           │
           ▼
┌─────────────────────┐
│ PHASE CHARACTERISTICS│
│ OF EVALUATED FILTER │
└─────────────────────┘
           │
           ▼
┌─────────────────────┐
│   AUTOCORRELATION   │
│      FUNCTION       │
└─────────────────────┘
           │
           ▼
┌─────────────────────┐
│  SEARCH FOR FIRST   │
│       PEAK          │
└─────────────────────┘
           │
           ▼
```

DIGITAL WATERMARK

FIG. 9

FIG. 10A

[SN=10(dB) Fr=100(Hz) Nb=100]

POINT
S/N=10dB

FIG. 10B

[SN=0(dB) Fr=100(Hz) Nb=100]

POINT
S/N=0dB

[SN=-10(dB) Fr=100(Hz) Nb=100]

FIG. 10C

POINT
S/N=-10dB

FIG. 11

```
            ( START )

                 │
                 ▼                          S141
        ┌────────────────────────┐
        │ A/D-CONVERT MUSIC SIGNAL│
        │ TO FETCH DIGITAL DATA   │
        │ ONTO CPU                │
        └────────────────────────┘
                 │
                 ▼              S142                              S143
        ┌────────────────────────┐      ┌────────────────────────┐
        │ CONVOLUTE ALL-PASS FILTER│◄────│ DETERMINE TIME-VARYING  │
        │ TO GENERATE WATERMARKED │      │ CHARACTERISTICS BASED ON│
        │ SIGNAL                  │      │ WATERMARK SIGNAL        │
        └────────────────────────┘      └────────────────────────┘
                 │
                 ▼              S144
        ┌────────────────────────┐
        │ D/A-CONVERT WATERMARKED │
        │ SIGNAL INTO AUDIO SIGNAL│
        └────────────────────────┘
                 │
                 ▼
            (  END  )
```

F I G. 12

ORIGINAL AUDIO SIGNAL

A/D-CONVERT SIGNAL TO FETCH DATA ONTO CPU ～S151

SEGMENT DATA INTO FRAMES EACH HAVING GIVEN LENGTH ～S152

ESTIMATE ARMA MODEL PARAMETER USING CORRESPONDING FRAME OF ORIGINAL SIGNAL ～S153 ← ORIGINAL AUDIO SIGNAL

RE-MIX FILTER BASED ON ESTIMATED MODEL PARAMETERS ～S154

GENERATE TIME-SERIES DATA BY ARRANGING PHASE CHARACTERISTICS OF RESPECTIVE FREQUENCIES IN TURN ～S155

CALCULATE AUTOCORRELATION FUNCTION OF OBTAINED TIME-SERIES DATA ～156

ESTIMATE MODULATION PERIOD OF FILTER BY DETECTING PEAKS OF AUTOCORRELATION FUNCTION ～S157

DECODE WATERMARK INFORMATION BASED ON MODULATION PERIOD ～S158

WATERMARK INFORMATION

F I G. 13

START

PHASE MODULATION USING TIME-VARYING ALL-PASS FILTER —S161

VERIFY TIME-VARYING CHARACTERISTICS BASED ON WATERMARK DATA —S162

SEGMENT SIGNAL INTO FRAMES —S163

EXTRACT CORRESPONDING FRAME OF ORIGINAL AUDIO SIGNAL —S165

ARMA MODEL PARAMETER ESTIMATION —S164

MIX FILTER BASED ON ESTIMATED PARAMETERS —S166

GENERATE TIME-SERIES DATA BY ARRANGING PHASES IN TURN —S167

CALCULATE AUTOCORRELATION FUNCTION AND EXTRACT PEAKS —168

CALCULATE PERK PERIOD —S169

END

F I G. 14

MUSIC SIGNAL

WATERMARK INFORMATION TO BE EMBEDDED

S171

CONTINUOUSLY MAKE PHASE MODULATION USING TIME-VARYING ALL-PASS FILTER

S172

DETERMINE TIME-VARYING CHARACTERISTICS OF FILTER

EMBEDDED SIGNAL

FIG. 15

START

SEGMENT SIGNAL INTO FRAMES S181

S182

ESTIMATE ARMA MODEL PARAMETER

S183

EXTRACT CORRESPONDING FRAME OF ORIGINAL AUDIO SIGNAL

MIX FILTER BASED ON ESTIMATED PARAMETERS S184

GENERATE TIME-SERIES DATA BY ARRANGING PHASES IN TURN 185

CALCULATE AUTOCORRELATION FUNCTION AND EXTRACT PEAKS S186

CALCULATE PEAK PERIOD S187

END

FIG. 16